(19) Europäisches Patentamt
European Patent Office
Office européen des brevets

(11) Veröffentlichungsnummer: **0 341 472 A2**

(12) **EUROPÄISCHE PATENTANMELDUNG**

(21) Anmeldenummer: **89107309.0**

(51) Int. Cl.4: **G01N 27/30**

(22) Anmeldetag: **25.04.89**

(30) Priorität: **13.05.88 DE 3816458**

(43) Veröffentlichungstag der Anmeldung:
**15.11.89 Patentblatt 89/46**

(84) Benannte Vertragsstaaten:
**AT BE CH DE ES FR GB GR IT LI LU NL SE**

(71) Anmelder: **Potje-Kamloth, Karin**
**Rathausstrasse 2**
**D-8012 Ottobrunn(DE)**

Anmelder: **Josowicz, Mira, Dr.**
**Robert-Koch-Strasse 20**
**D-8012 Ottobrunn(DE)**

(72) Erfinder: **Potje-Kamloth, Karin**
**Rathausstrasse 2**
**D-8012 Ottobrunn(DE)**
Erfinder: **Josowicz, Mira, Dr.**
**Robert-Koch-Strasse 20**
**D-8012 Ottobrunn(DE)**

(54) **Ultramikroelektrode, Verfahren zu deren Herstellung und ihre Verwendung.**

(57) Es wird eine Ultramikroelektrode mit einem Draht oder einer Faser aus Edelmetall- bzw. Kohlenstoff und einer darauf angeordneten Isolierschicht beschrieben, wobei die Isolierschicht aus einem vernetzten Poly-4-oxyphenylen, Poly-4-thiophenylen oder Poly-4-anilin besteht. Solche Ultramikroelektroden können als Disk-, zylindrische, bipolare oder abgeschirmte Elektroden verwendet werden und eigenen sich zur Verwendung als Stimulationselektroden, amperometrische oder potentiometrische Mikrosensoren oder als Elektroden für die analytischen Meßtechnik, z.B. für die inverse Voltammetrie.

EP 0 341 472 A2

## Ultramikroelektrode. Verfahren zu deren Herstellung und ihre Verwendung

Die Erfindung betrifft eine Ultramikroelektrode mit einem Leiter aus Edelmetalldraht oder Kohlenstoffaser und einer darauf angeordneten Isolierschicht, ein Verfahren zu ihrer Herstellung und ihre Verwendung.

Ultramikroelektroden bestehen aus sehr dünnen elektrischen Leitern in Form von Fasern oder Drähten mit einem Durchmesser von wenigen µm und einer darauf angeordneten Isolierschicht. Von solchen Mikroelektroden wird gefordert, daß sie in einen weiten Bereich von Lösungsmitteln verwendet werden konnen, einfach zu bauen sind, genaue Abmessungsdimensionen haben und wiederholt verwendet werden können.

Die Isolierschicht bisher üblicher Ultramikroelektroden besteht aus Glas oder einem Epoxyharz. Solche Ultramikroelektroden sind in folgenden Literaturstellen beschrieben:

R.W. Wightman and D.O. Wipt, Electroanalytical Chemistry, Vol. 15, S. 44 bis 51, New York, Marcel Dekker-Verlag (1970), Martin Fleischmann, Stanley Pons, Debra R. Rolison und Parbury P. Schmidt: Ultramikroelectrodes, Kapitel 3, Seite 66 bis 106, Datatech Systems, Inc., Science Publishers, (1987); D.W. Hill, B.W. Watson, IEE Medical Electronics Monograph 7-12, I. Microelectrodes and input amplifiers, Seite 1 bis 26, Peter Peregrinus Ltd. (1974). Üblicherweise werden solche Ultramikroelektroden hergestellt, indem man ein Glasröhrchen zu einer Kapillare zieht und in die so gezogene Kapillare einen Draht oder eine Faser aus Edelmetall bzw. Kohlenstoff einführt und darin verschweißt. Die Dicke der Isolierschicht aus Glas oder Epoxyharz liegt bei etwa 1 bis 2 mm, wobei die Ausbildung einer gleichmäßigen Schichtdicke über die gesamte Elektrodenlänge schwierig ist.

Ultramikroelektroden mit Glasisolation sind darüber hinaus sehr brüchig, da es aufgrund der unterschiedlichen thermischen Ausdehnungskoeffizienten von Glas und Fasermaterial bei der thermischen Beanspruchung zur Bildung von Haarrissen im Glas kommt. Diese Haarrisse sind die Ursache für eine verhältnismäßig starke Vergrößerung der Elektrodenoberfläche sowie für eine nichtlineare Diffusion und für Kanteneffekte. Ferner führt die schlechte Adhäsion des Verkapselungsmaterials sowohl bei Glas als auch bei Epoxyharzen auf dem Draht oder der Faser zu Eindringen der Flüssigkeit unter die Isolationsschicht. Weiterhin weisen Epoxyharze eine schlechte Stabilität gegenüber organischen Lösungsmitteln auf, da Bestandteile des Harzes herausgelöst werden. Dies führt zu einer Degradation oder Alterung des Epoxyharzes. All diese Effekte führen zu einer Erhöhung des Reststromanteiles und damit zur Erhöhung der Doppelschicht-Kapazität des Isolatormaterials. Folglich beeinträchtigen diese das Signal-Rausch-Verhältnis sehr ungünstig, was zu Lasten der Ansprechzeit und der Reproduzierbarkeit der Messung geht. Ferner werden solche Ultramikroelektroden in Handarbeit hergestellt, was mit einem hohen Ausschuß, einer geringen Produktivität und Reproduzierbarkeit verbunden ist.

Demgemäß liegt der vorliegenden Erfindung die Aufgabe zugrunde, eine im Gebrauch stabile Ultramikroelektrode mit einer gegen chemische und mechanische Einflüssen resistente isolierenden Schicht mit niedriger Doppelschichtkapazität zur Verfügung zu stellen, die auch bei einer sehr schnellen Meßsignalaufnahme eine störungsfreie Auswertung des Meßsignals erlaubt. Diese Ultramikroelektrode kann mit hoher Produktivität, Reproduzierbarkeit und verbesserter Gleichmäßigkeit der Schichtbildung hergestellt werden. Die Isolatorschicht kann unabhängig von der Dimension des Elektronenleiters gleichmäßig abgeschieden werden, weist keine Risse auf und hat ausgezeichnete Adhasionseigenschaften.

Diese Aufgabe wird mit dem kennzeichnenden Merkmalen des Patentanspruchs 1 gelöst. Vorteilhafte Ausgestaltungen sind in den Unteransprüchen erwähnt.

Da die Isolierschicht aus einem vernetzten Poly-4-oxyphenylen, Poly-4-thiophenylen oder Poly-4-anilinen besteht, wird eine hohe Durchbruchsspannung erzielt, wobei kapazitive Kopplungen der Isolierwand kleingehalten werden. Hierdurch wird bei rascher Aufnahme eines Meßsignals das Signalrauschen bzw. Leckströme weitgehend unterdrück. Durch das elektrochemische Auftragen der Isolierschichten wird eine sehr dünne und gleichmäßige Schichtdicke auf der Faser oder dem Draht erzielt, wodurch eine automatische Herstellung mit ho her Produktivität und guter Reproduzierbarkeit ermöglicht wird.

Die Verwendung von Poly-4-oxyphenylen als Korrosionsschutzschichten ist in der Literaturstelle J. Electrochem. Soc.: Electrochemical Science and Technology, S. 2276 bis 2281 (1981) beschrieben. Solche Korrosionsschutzschichten zeigten bei einer Dicke von wenigstens 10 µm gute physikalische Eigenschaften, insbesondere Korrosionsfestigkeit. Es wird berichtet, daß Schichten mit einer Dicke von lediglich 1 bis 2 µm weder einen verbesserten Metallschutz noch Vorteile beim Härten bzw. Vernetzen zeigten. Wegen dieser Nachteile bei geringen Schichtdicken konnte nicht erwartet werden, daß solche Poly-4-oxyphenylen-Schichten als Isoliermaterial für Ultramikroelektroden geeignet sein könnten.

Eine Ausführungsform der Ultramikroelektrode ist in der Fig. 1 gezeigt. Fig. 1A stellt eine Längsschnittansicht einer konisch verjüngten Ultramikroelektrode dar, während Fig. 1B einen Querschnitt der Mikroelektrode erläutert. Die Bezugsziffer 1 bedeutet einen Edelmetalldraht oder eine Kohlenstoffaser und die Bezugsziffer 2 stellt die Isolierschicht dar. Die Ultramikroelektrode wird als Disk-Ultramikroelektrode bezeichnet.

Eine weitere Ausführungsform der Ultramikroelektrode ist in Fig. 2A und B in Längs- bzw. Querschicht dargestellt. Die Ultramikroelektrode wird als zylindrische Ultramikroelektrode bezeichnet. Die Spitze und der obere Endbereich der Elektrode (3) und (4) ist frei von Isoliermaterial.

Eine weitere Ausführungsform der Ultramikroelektrode ist in Fig. 3A in Längsansicht dargestellt. Die Ultramikroelektrode wird als bipolare Ultramikroelektrode bezeichnet. Die Bezugsziffer (1) bedeutet einen Edelmetalldraht oder eine lenstoff-Faser auf den/die die Isolierschicht aufgebracht ist (3). Bezugsziffer (2) bedeutet eine metallische Schicht, die gegen die zur weiteren Meßsignalableitung notwendigen leitenden Schicht (6) durch Epoxy (5) isolierend getrennt ist. Bezugsziffer (4) bedeutet eine Glaskapillare, die als Halterung verwendet wird. Der untere Bereich der Elektrode (7) ist frei von Metall.

Eine weitere Ausführungform der Ultramikroelektrode ist in Fig. 3B ebenfalls in Längsquerschnitt dargestellt. Die Ultramikroelektrode wird als abgeschirmte Ultramikroelektrode bezeichnet. Bezugsziffer (1) bis (6) haben die gleichen Bedeutungen wie in Fig. 3A.

Bei der erfindungsgemäß verwendeten Isolierschicht sind die Phenylenreste in ortho- oder meta-Stellung über Alkylengruppen mit 2 bis 10 Kohlenstoffatomen vernetzt. Vorzugsweise haben die Alkylengruppen eine Länge von 2 bis 5 Kohlenstoffatomen.

Die Isolierschichten werden auf dem Draht oder der Faser durch elektrochemische Polymerisation von Phenol-, Thiophenol- und/oder Anilin-haltigen Monomeren in einem Elektrolytbad hergestellt, wobei zunächst eine Polymerschicht mit einer linearen Struktur gebildet wird. Eine bei der elektrochemischen Abscheidung bevorzugt gebildetes lineares Polymer hat folgende wiederholende Einheit:

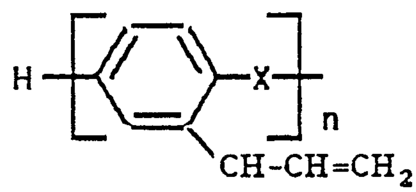

X= 0, S oder NH

Die eingesetzten Monomeren müssen in ortho-Stellung blockiert sein, damit eine lineare Polymerstruktur gebildet wird. Zweckmäßigerweise weist der Phenylrest des Monomeren in ortho-Stellung einen aliphatischen Rest bis zu 10 Kohlenstoffatomen, vorzugsweise bis zu 5 Kohlenstoffatomen auf, wobei dieser aliphatische Rest zweckmäßigerweise ungesättigt ist. Ein geeigneter ungesättigter aliphatischer Rest hat 2 bis 10, vorzugsweise 2 bis 5 Kohlenstoffatome und ist vorzugsweise eine Vinyl- oder Allylgruppe. Bevorzugte Monomere sind 2-Allylphenol, 2-Allylthiophenol und 2-Allylanilin bzw. entsprechende Vinylverbindungen.

Die elektrochemische Abscheidung erfolgt vorzugsweise im wäßrigen, alkalischen Milieu an der Anode. Vorzugsweise wird eine Wasser-Alkohol-Mischung verwendet, wobei das Mischungsverhältnis (Volumen) bei 1:10 bis 10:1, vorzugsweise 1:5 bis 5:1 liegt. Ein niederer aliphatischer Alkohol ist bevorzugt. Die Elektrolytlösung enthält neben dem Monomeren ein Amin oder eine wässrige Ammoniaklösung oder ein Gemisch von beiden, um die Passivierung der Elektrodenoberfläche zu unterdrücken. Vorzugsweise ist das Amin ein primäres Amin mit einer aliphatischen Gruppe. Die aliphatische Gruppe ist zweckmäßigerweise eine Alkylgruppe mit 1 bis 10 Kohlenstoffatomen, die auch ungesättigt sein kann. Beispielhafte Amine sind Allylamin und Propylamin.

Vorzugsweise enthält die Elektrolytlösung einen Adhäsionsverbesserer, um die Haftung an der Elektrodenoberfläche zu fördern. Geeignete Adhäsionsverbesserer sind Ethylenglykolmonobutyläther oder Butoxymethanol. Der Adhäsionsverbesserer wird in einem Anteil von 1 bis 10 Volumen%, bezogen auf die Elektrolytlösung, verwendet. Die elektrochemische Abscheidung erfolgt bei 20 bis 50 °C, vorzugsweise bei Raumtemperatur und bei konstantem Potential von vorzugsweise 2 bis 8 Volt, insbesondere 4 bis 6 Volt.

Nach der elektrochemischen Abscheidung der Polymerschicht auf dem Draht oder der Faser erfolgt eine Vernetzung der vorhandenen ungesättigten Gruppen durch Erhitzen oder Bestrahlung. Zweckmäßigerweise wird eine Temperaturbehandlung, vorzugsweise bei 120 bis 200 °C, insbesondere bei 150 °C durchgeführt. Eine geeignete Temperatur läßt sich anhand einfacher Versuche bei einer gegebenen Polymerschicht leicht ermitteln. Eine Bestrahlung mit UV-Strahlen ist auch möglich.

Damit eine gute Haftung zwischen der Isolierschicht und der Faser bzw. dem Draht gewährleistet wird,

muß sorgfältig darauf geachtet werden, daß der Draht oder die Faser vor der elektrochemischen Abscheidung frei von Passivierungsschicht ist. Zu diesem Zwecke sollte der Draht oder die Faser chemisch und/oder elektrochemisch zur Entfernung der Passivierungsschicht gereinigt werden. Ein geeignetes Verfahren besteht in einem elektrochemischen Ätzen mit einer Lösung von Ethylendiamintetraacetat, $NH_4OH$ und $H_2O_2$ bei einer pulsierenden Spannung von 0 bis +2 V für etwa 5 bis 10 min. Anschließend wird an die Elektrode in einer 1 M $KNO_3$-Lösung eine Spannung von + 0,4 bis - 0,4 V 10 min. lang angelegt.

Die Dicke der Faser oder des Drahtes liegt zweckmäßigerweise im Bereich von 0,1 bis 15 µm, vorzugsweise 5 bis 15 µm, insbesondere im Bereich von 8 bis 10 µm. Da die Ultramikroelektrode zweckmäßigerweise an einem Ende konisch verjüngt ist, kann der Durchmesser der Elektrodenfaser an der Spitze bis zu 0,1 µm betragen.

Die Dicke der Isolierschicht liegt zweckmäßigerweise im Bereich von 1,0 bis 3,0 µm, vorzugsweise in Bereich Von 1,5 bis 2,0 µm. Es wurde gefunden, daß die vernetzte Isolier schicht mit einer derartigen Schichtdicke den gewünschten Isoliereffekt ergibt.

Das Ende der Mikroelektrode ist zweckmäßigerweise als Disk ausgebildet, wie in der Fig. 1 dargestellt ist. Hierbei kann die Dicke der Isolierschicht an der Spitze der Mikroelektrode gleich oder kleiner als der Durchmesser der Faser sein.

Damit die elektroaktive Fläche der Ultramikroelektrode modifiziert werden kann, z.B. durch Auftragen eines Metalls oder einer ionenselektiven Schicht und damit ein ausreichender elektrischer Kontakt der Ultramikroelektrode ermöglicht wird, sind die Endbereiche frei von Isolierschicht. Ein solcher von Isolierschicht freier Endbereich der Ultramikroelektrode kann dadurch erreicht werden, daß man nach der elektrochemischen Abscheidung der Polymerschicht diese im Endbereich wieder chemisch ablöst. Hierbei wird die Tatsache ausgenutzt, daß das unvernetzte lineare Polymere zwar im wässrigen System unlöslich ist, jedoch in verschiedenen organischen Lösungsmitteln wie Aceton löslich ist. Alternativ ist es auch möglich, die Spitze der Ultramikroelektrode nach der Vernetzung mechanisch zu öffnen, so daß die Elektrodenfaser freigelegt wird. Hierzu kann die Spitze der Mikroelektrode abgeschnitten werden.

Die in Fig. 2 dargestellte Mikroelektrode kann auch hergestellt werden, in dem die Spitze der Elektrode (3) vor dem Aufbringen der Isolierschicht mit einem Galvanoresist oder einem Metall abgedeckt wurde. Der Galvanoresist schützt den Bereich (3) während der elektrochemischen Polymerisation vor einer Abscheidung der Polymerschicht. Nachdem die Isolierschicht (2) aufgebracht worden ist,wird der Galvanoresist von dem Bereich (3) wieder chemisch abgeätzt. Als Galvanoresist und Ätzmittel können übliche im Handel erhältliche Produkte eingesetzt werden. Der Bereich (3) und (4) kann beson ders genau abgedeckt werden, indem eine chemische oder elektrochemische Abscheidung von z.B. Kupfer oder Nickel durchgeführt wird. Diese Metalle können auch chemisch wieder abgeätzt werden, nachdem sie ihre Schutzfunktion erfüllt haben.

Zur Vermeidung von Übergangswiderständen bei der Ableitung des Meßsignals, z. B. bei Kohlenstoff-Fasern, wird der Endbereich (4) in Fig. 2A mit Metall beschichtet. Dabei können die bereits zur Maskierung verwendeten Metalle, z.B. Kupfer oder Nickel, nach der Beschichtung mit Polymer und dessen Vernetzung auf der Faser verbleiben oder zusätzlich Edelmetalle bei der Verwendung der Elektrode in korrosiven Milieu aufgebracht werden. Auch gold- oder silbergefüllte leitende Kleber können zur Metallisierung verwendet werden.

Die von Isoliermatieral freie Spitze der Ultramikroelektrode, die sowohl als Disk (s. Fig. 1A) oder als Zylinder (s. Fig. 2A) ausgebildet sein kann, wird für die Verwendung der Elektrode in der analytischen Meßtechnik z.B. für die inverse Voltammetrie elektrochemisch metallisiert, z.B. mit Quecksilber.

Die in Fig. 3A dargestellte bipolare Ultramikroelektrode wird hergestellt, indem auf die vernetzte Polymerschicht (3) entweder chemisch und anschließend elektrochemisch oder mit einer physikalischen Methode z.B. durch Aufdampfen eine Metallschicht (2) aufgebracht, bevorzugt sind dabei Edelmetalle, wie Platin, Palladium oder Gold. Die Schichtdicke der Metallschicht beträgt 0,2 bis 5 µm, vorzugsweise 0,5 bis 1 µm.

Die chemische Metallisierung kann mit einem Prozeß zur stromlosen Verkupferung von nichtleitenden Materialien erfolgen, der im Handel erhältlich ist. Da die äußere Metall schicht (2) als Gegenelektrode zur inneren Disk- oder zylindrischen Ultramikroelektrode (1) geschaltet wird, muß zwischen Arbeitselektrode (Innenleiter z.B. Kohlenstoff-Faser) und Gegenelektrode (Außenleiter - Metall) ein genügend großer Bereich (7) frei von Metall gehalten werden, um Kurzschlüsse zu vermeiden. Der Abstand zwischen Arbeits- und Gegenelektrode ist abhängig von der Leitfähigkeit des Elektrolyten, zweckmäßigerweise wird ein Abstand kleiner als 2mm gewählt.

Dazu wird der metallfreie isolierte Bereich entweder vor der chemischen Verkupferung maskiert oder das bereits abgeschiedene Kupfer chemisch oder elektrochemisch abgeätzt. Zur Maskierung kann ein geeigneter im Handel erhältlicher Galvanoresist oder Ätzresist verwendet werden. Anschließend wird die

verbliebene Kupferschicht elektrochemisch mit Edelmetallen, wie Gold, Platin oder Palladium verstärkt.

Erfolgt die Metallisierung der isolierenden Polymerschicht mit Hilfe eines physikalischen Prozesses, so kann auch hier der oben genannte von Metall frei zu haltende Bereich zwischen Arbeitselektrode und Gegenelektrode entweder vorher mit einer Maske mechanisch abgedeckt oder mit einer Schicht (Ätzresist oder Galvanoresist) überzogen werden, die anschließend chemisch wieder abgelöst wird. Auch das chemische oder elektrochemische Ablösen der aufgebrachten Edelmetallschicht ist möglich.

Zur Verbesserung der Adhäsion der Edelmetallschicht auf dem Polymer wird eine metallische Zwischenschicht, wie z.B. eine Ti/W-Legierung, Chrom oder Vanadium, verwendet. Die Auswahl der Zwischenschicht hängt von dem eingesetzten Edelmetall ab.

Die in Fig. 3B dargestellte abgeschirmte Ultramikroelektrode wird wie die in Fig. 3A schematisch abgebildete Ultramikroelektrode hergestellt, ohne daß der untere Endbereich frei von Metall ist. Zusätzlich wird auf der Metallschicht (2) eine Polymerschicht abgeschieden und anschließend zum Isolator vernetzt. Die Metallschicht (2) wird geerdet und dient als Abschirmung. Die Abschirmung wird bevorzugt bei Ultramikroelektroden mit sehr kleiner elektroaktiver Fläche, bei denen Ströme im Pikoamperebereich fließen und bei Messungen im MHz-Bereich eingesetzt.

Die vorstehend erläuterten Ultramikroelektroden sind insbesondere im biochemischen und medizinischen Bereich einsetzbar, etwa als amperometrische oder potentiometrische Sensoren oder als Stimulationselektrode bzw. als Elektroden in der analytischen Meßtechnik, z.B. für die inverse Voltammtrie.

Gemäß einer bevorzugten Ausführungsform können die Ultramikroelektroden als potentiometrische Mikrosensoren verwendet werden. Hierzu wird einer der von Isolierschicht freien Bereiche der Ultramikroelektrode mit einer ionenselektiven Schicht versehen, die ein ionenselektives Material enthält. Geeignete ionenselektive Materialien sind beispielsweise Salze, schwerlösliche Metalle oder Austauschharze, Kronenäther, Komplexbilder usw., die in die Matrix eines Polymers (z.B. PVC, Silicongummi usw.) eingelagert sind. Ionenselektive Schichten haben Membranfunktion und lassen nur die zu bestimmende Substanz hindurch, die potentiometrisch über den Leiter erfaßt werden soll. Daher darf die ionenselektive Schicht nicht vollkommen isolierend sein.

Gemäß einer bevorzugten Ausführungsform enthält die ionenselektive Schicht als Matrix ein Copolymer aus Phenol-, Thiophenol und/oder Anilin-haltigen Monomeren mit einer ungesättigten aliphatischen Gruppe in ortho-Stellung mit wenigstens einem nicht vernetzbaren OH-, $NH_2$ - oder SH-haltigen aromatischen Comonomeren, wobei das Copolymer durch elektrochemische Abscheidung und anschließender Vernetzung gebildet wird, wie vorstehend bei der Isolierschicht erläutert wurde. Das ionenselektive Material kann während der elektrochemischen Abscheidung als Bestandteil der Elektrolytlösung oder nach der Vernetzung durch Tränken in die Copolymerschicht eingelagert werden. Damit das Matrixmaterial die für ionenselektive Schichten angestrebten Membran Eigenschaften erfüllt, wird die elektrochemische Abscheidung in Gegenwart eines nicht vernetzbaren OH-, NH- oder SH-haltigen aromatischen Comonomeren gebildet. Ein geeignetes Comonomeres ist ein Phenol, Thiophenol oder Anilin mit einer gesättigten Alkylgruppe mit 1 bis 10 Kohlenstoffatomen in ortho-Stellung. Die Alkylgruppe hat zweckmäßigerweise 1 bis 5 Kohlenstoffatome. Ein geeignetes Comonomeres ist o-Kresol oder-Äthylphenol.

Das nicht vernetzbare Comonomere wird in einem Anteil von vorzugsweise wenigstens 40 Mol% der Gesamtmonomeren, insbesondere in einem Anteil von 50 bis 80 Mol% verwendet. Der Anteil des Monomeren mit ungesättigter aliphatischer Gruppe beträgt entsprechend 60 Mol% oder weniger, insbesondere 20 bis 50 Mol%.

Der Anteil des ionenselektiven Materials in der Schicht beträgt zweckmäßigerweise 0,5 bis 5 Gew-%, bezogen auf das Matrixmaterial. Die Dicke der ionenselektiven Schicht ist 1 bis 3 µm, vorzugsweise 1,5 bis 2 µm.

Die Erfindung wird nachstehend durch ein Beispiel näher erläutert.

## Beispiel

Es wurde eine Ultramikroelektrode, wie in der Fig. 1 gezeigt, hergestellt. Hierzu wurde eine Kohlenstoffaser mit einem Durchmesser von 8 µm, bei dem eine Ende konisch verjüngt war, anodisch in folgender Elektrolytlösung beschichtet.

| | |
|---|---|
| 0,23 Mol/l | 2-Allylphenol |
| 0,40 Mol/l | Allylamin oder Ammoniak |
| 0,20 Mol/l | Cellosolve (Ethylenglykolmonobutylether) |
| gelöst in Methanol und Wasser 1:1 (Volumenanteile) | |

Die elektrochemische Polymerisation wurde bei einem konstanten Potential von 4 V bei Zimmertemperatur 30 Minuten lang durchgeführt. Anschließend wird die Polymerschicht in einem Ofen bei 150° C erhitzt, wodurch eine Vernetzung der abgeschiedenen Polymerschicht erfolgt. Die gebildete Isolierschicht wies eine Schichtdicke von 1,5 µm auf, die für die Isolierung ausreichend ist. Der gemessene Gleichstromwiderstand betrug 2 MΩ. Die Durchbruchspannung in einer 1 M KCl-Lösung ist größer als $10^6$ V/cm. Die Kapazität der Isolierschicht betrug etwa 1 pF. Aufgrund der niedrigen Doppelschichtkapazität ist das Signal/Rausch-Verhältnis während der Meßwertaufnahme sehr niedrig, was eine rasche Signalaufnahme ermöglicht.

## Ansprüche

1. Ultramikroelektrode mit einem Draht oder einer Faser aus Edelmetall- bzw. Kohlenstoff und einer darauf angeordneten Isolierschicht, dadurch gekennzeichnet, daß die Isolierschicht aus Poly-4-oxyphenylen, Poly-4-thiophenylen oder Poly-4-anilin besteht, deren Phenylenreste in ortho-Stellung über Alkylengruppen mit 2 bis 10 Kohlenstoffatomen vernetzt sind.

2. Ultramikroelektrode nach Anspruch I, dadurch gekennzeichnet, daß die Dicke der Isolierschicht 1,0 bis 3,0 µm beträgt und die Faser einen Durchmesser von 0,1 bis 15 µm hat.

3. Ultramikroelektrode nach einem der vorhergehenden Ansprüche, dadurch gekennzeichnet, daß die Ultramikroelektrode an einem Ende als Disk ausgebildet ist, welche frei von Isolatormaterial ist.

4. Ultramikroelektrode nach einem der vorhergehenden An sprüche, dadurch gekennzeichnet, daß beide Endbereiche der Mikroelektrode frei von Isolierschicht sind.

5. Ultramikroelektrode nach einem der vorhergehenden Ansprüche, dadurch gekennzeichnet, daß auf der Oberfläche der Isolierschicht eine Metallelektrode aufgebracht ist.

6. Ultramikroelektrode nach Anspruch 5, dadurch gekennzeichnet, daß auf der Metallelektrode wiederum eine Isolierschicht aufgebracht ist.

7. Ultramikroelektrode nach einem der vorhergehenden Ansprüche, dadurch gekennzeichnet, daß an einem Endbereich oder an beiden Endbereichen der Mikroelektrode, der/die frei von Isolierschicht sind, Metall aufgebracht ist.

8. Ultramikroelektrode nach einem der vorhergehenden Ansprüche, dadurch gekennzeichnet, daß einer der von Isolierschicht freien Bereiche der Ultramikroelektrode mit einer ionenselektiven Schicht versehen ist.

9. Ultramikroelektrode nach Anspruch 8, dadurch gekennzeichnet, daß die ionenselektive Schicht als Matrix ein Copolymer von Phenol-, Thiophenol- und/oder Anilin-haltigen Monomeren mit einer ungesättigten Gruppe in ortho-Stellung mit einem nicht vernetzbaren OH-, $NH_2$- oder SH-haltigen aromatischen Comonomeren enthält, welches eine gesättigte aliphatische Gruppe in ortho-Stellung mit 1 bis 10 Kohlenstoffatomen besitzt.

10. Verfahren zur Herstellung der Ultramikroelektrode nach einem der vorhergehenden Ansprüche, dadurch gekennzeichnet, daß auf einem Draht oder einer Faser aus Edelmetall bzw. Kohlenstoff durch elektrochemische Polymerisation von Phenol-,Thiophenol- und/oder Anilin- haltigen Monomeren, welches in ortho-Stellung einen ungesättigten aliphatischen Rest mit 2 bis 10 Kohlenstoffatomen enthält, aus einem Elektrolytbad mit alkalischen Milieu, das ein Amin, insbesondere ein primäres Amin mit einer aliphatischen Gruppe oder eine wässrige Ammoniaklösung oder ein Gemisch von beiden und einen Adhäsionsverbesserer enthält, eine Polymerschicht anodisch abgeschieden wird, welche anschließend zu einer chemisch resistenten Isolierschicht vernetzt wird.

11. Verfahren nach 10, dadurch gekennzeichnet, daß die Vernetzung der Polymerschicht durch Erhitzen oder durch Bestrahlung erfolgt.

12. Verfahren nach Anspruch 10 und 11, dadurch gekennzeichnet, daß der Draht oder die Faser vor der elektrochemischen Abscheidung chemisch und/oder elektrochemisch zur Entfernung der Passivierungsschicht gereinigt wird.

13. Verfahren nach Anspruch 10 bis 12 dadurch gekennzeichnet, daß nach der elektrochemischen Abscheidung der Polymerschicht diese in einem Endbereich wieder chemisch abgelöst wird.

14. Verfahren nach Anspruch 10 bis 13, dadurch gekennzeichnet, daß ein Endbereich oder beide Endbereiche der Mikroelektrode vor der elektrochemischen Abscheidung metallisiert wird/werden.

15. Verfahren nach Anspruch 10 bis 14, dadurch gekennzeichnet, daß die Spitze der Mikroelektrode nach der Vernetzung der Polymerschicht zum Isolator mechanisch geöffnet wird, so daß der Draht bzw. die Faser freiliegt.

16. Verfahren nach Anspruch 10 bis 15, dadurch gekennzeichnet, daß nach dem elektrochemischen Auftragen der Poly merschicht und anschließenden Vernetzung die Polymerschicht entweder mit physikalischen bzw. chemischen und/oder elektrochemischen Verfahren metallisiert wird.

17. Verfahren nach Anspruch 10 bis 16, dadurch gekennzeichnet, daß der isolierte Bereich, der weniger als 2 mm von dem elektroaktiven Endbereich der Mikroelektrode entfernt ist, vor der Metallisierung maskiert wird oder nach der Metallisierung vom Metall chemisch oder elektrochemisch wieder befreit wird.

18. Verfahren nach Anspruch 16, dadurch gekennzeichnet, daß auf die metallische Schicht wiederum elektrochemisch eine Polymerschicht nach Anspruch 10 und 11 aufgebracht und vernetzt wird.

19. Verfahren nach Anspruch 10 bis 18, dadurch gekennzeichnet, daß auf einem von Isolierschicht freien Endbereich der Ultramikroelektrode eine ionenselektive Schicht aufgebracht wird.

20. Verfahren nach Anspruch 19, dadurch gekennzeichnet, daß als Matrix für die ionenselektive Schicht eine Copolymerschicht aus Phenol-, Thiophenol- und/oder Anilin-Monomeren, die in ortho-Stellung eine ungesättigte aliphatische Gruppe aufweisen, mit wenigstens einem nicht vernetzbaren OH-, $NH_2$- oder SH-haltigen aromatischen Comonomeren durch elektrochemische Abscheidung und anschließender Vernetzung gebildet wird und die ionenselektive Komponente während der elektrochemischen Abscheidung oder nach der Vernetzung der Copolymerschicht eingelagert wird.

21. Verfahren nach Anspruch 20, dadurch gekennzeichnet, daß das nicht vernetzbare Comonomere in einem Anteil von wenigstens 40 Mol% der Gesamtmonomeren verwendet wird.

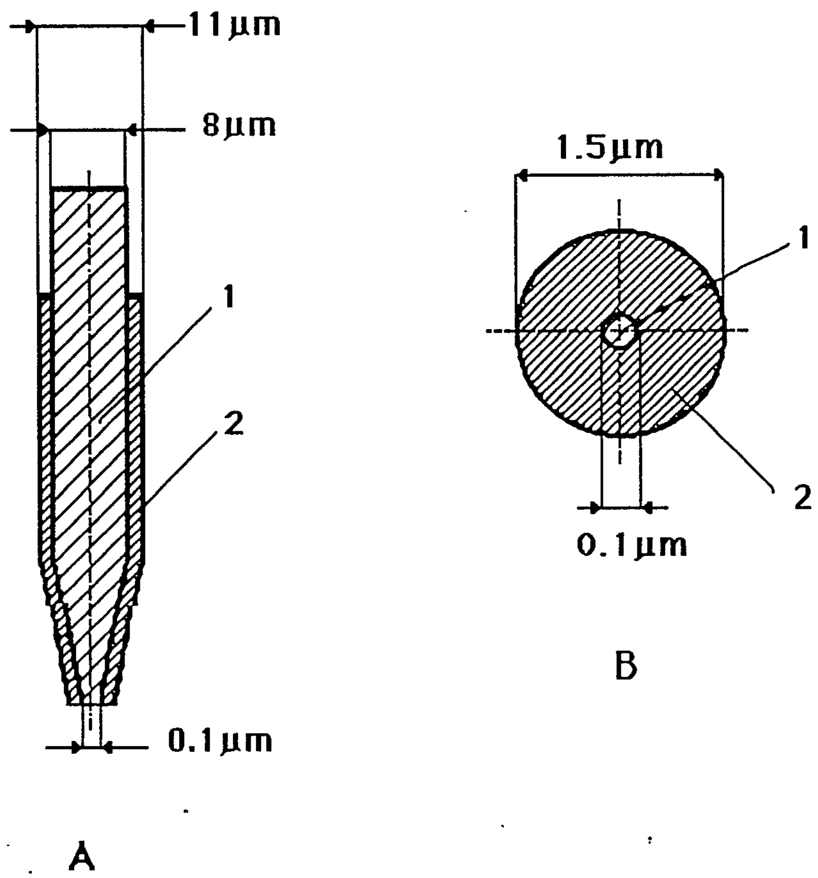


FIG. 1

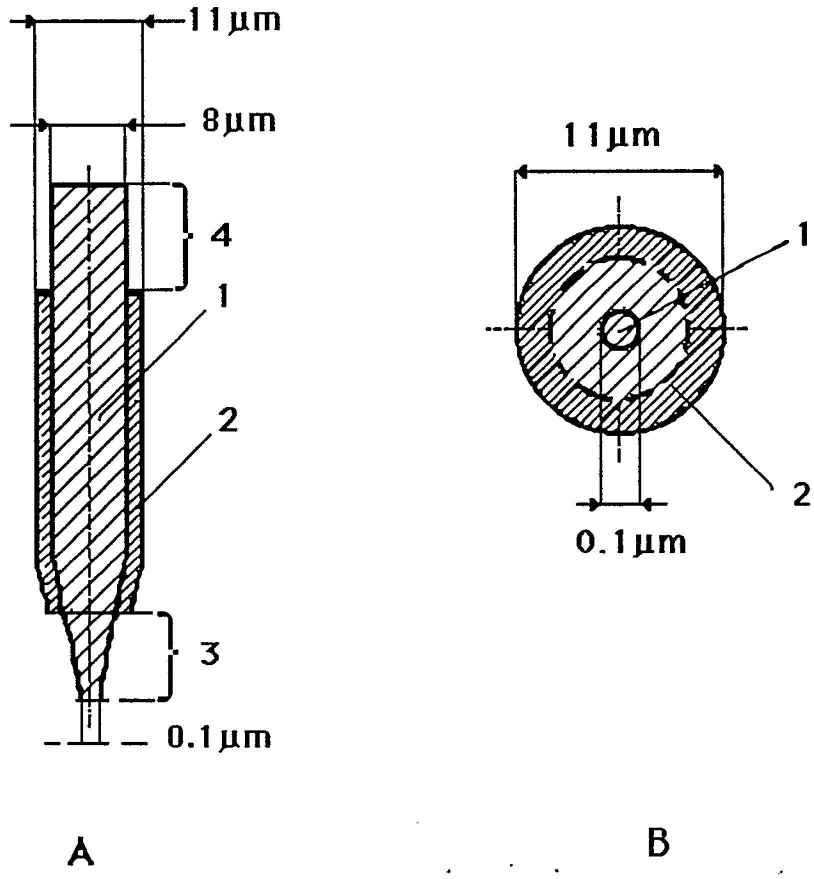


FIG. 2

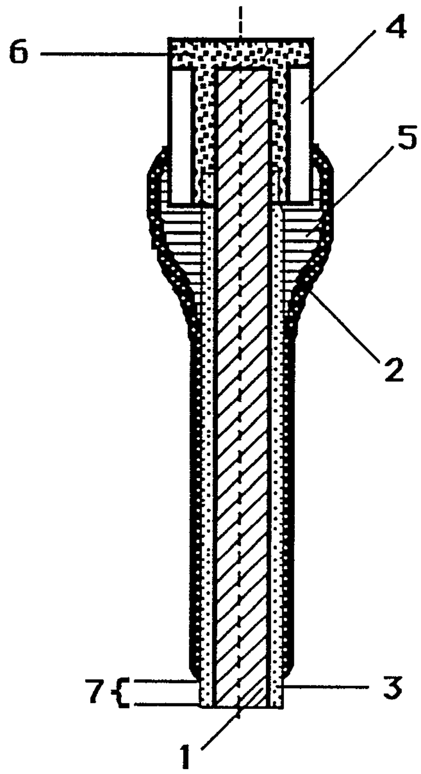


FIG. 3A

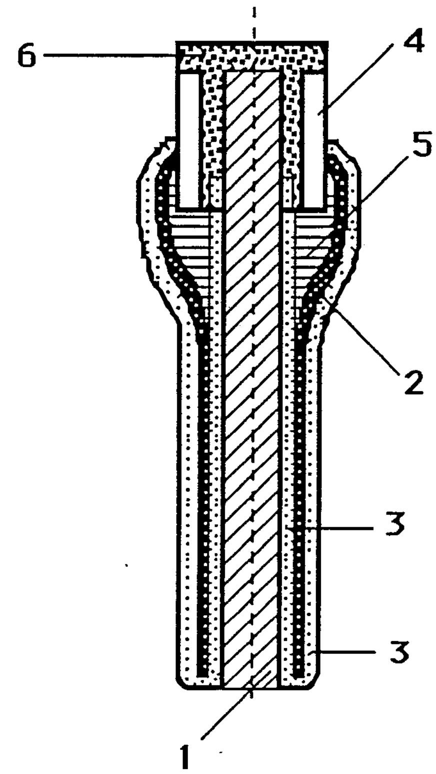


FIG. 3B